# FASCICULE DE BREVET EUROPEEN

(11) **EP 3 026 310 B1**
(45) Date de publication et mention de la délivrance du brevet: **16.08.2017**
(21) Numéro de dépôt: 14195474.3
(22) Date de dépôt: 28.11.2014
(51) Int. Cl.: F16K 31/08, F16K 11/16, F16K 31/06

(54) **Vanne électromagnétique pour gaz haute pression cryogénique**
Elektromagnetisches Ventil für kryogenes Hochdruckgas
Solenoid valve for cryogenic high-pressure gas

(43) Date de publication de la demande: 01.06.2016
(73) Titulaire: Safran Aero Boosters SA, 4041 Herstal (BE)
(72) Inventeur: Delille, Antoine, 5380 Pontillas (BE); Siméon, Bernard, 4031 Angleur (BE); Frippiat, Cédric, 4910 Jehanster (BE); Dellis, Olivier, 4000 Liège (BE)
(74) Mandataire: Lecomte & Partners

(56) Documents cités:
- FR-A1- 2 284 077
- US-A- 6 026 860

## Description

### Domaine technique

L'invention aborde le domaine des vannes électromagnétiques. Plus précisément, l'invention traite de vannes électromagnétiques à bille pour gérer une alimentation en carburant, notamment pour une alimentation en ergol dans un aéronef spatial.

### Technique antérieure

Une fusée est propulsée à l'aide d'un carburant ; de l'ergol, qui est contenu dans des réservoirs embarqués. Pour alimenter avec précision les propulseurs, des électrovannes sont associées aux réservoirs. Elles présentent généralement des actionneurs électromagnétiques utilisant le courant du réseau électrique de la fusée ; les actionneurs devant s'adapter à la tension et à l'intensité disponibles.

Pour maintenir ouverte une vanne électromagnétique, il est nécessaire d'alimenter en continu sa bobine. Cependant, le courant qui y circule a pour effet de chauffer la température de la vanne, dans certains cas jusqu'à 100°C ce qui peut avoir pour conséquence d'enflammer le carburant. Bien entendu, ce cas de figure est impérativement à éviter.

Le carburant est de l'ergol circulant sous forme gazeuse à une température atteignant les -200°C, et une pression de l'ordre de 400 bars. Cette pression exerce des efforts importants sur les éléments d'étanchéité, tout comme les vibrations d'une fusée lors de son décollage. Ces vibrations peuvent se traduire par des accélérations de 60g qui précipitent l'usure des surfaces d'étanchéité, de concert avec les chocs des mouvements de fermetures. Dans le cas d'une bille coopérant avec un siège, le mouvement de fermeture implique généralement que le siège absorbe l'énergie cinétique du plongeur de la vanne électromagnétique. Pour des billes de taille réduite, cela conduit à écrouir le siège, et à aplatir le poussoir de la bille. Au cours des cycles de fermetures, le poussoir ne recule pas suffisamment la bille de son siège, et le débit souhaité n'est pas disponible faute de section de passage suffisante. Par ailleurs, la dégradation du siège réduit l'étanchéité nominale. Il est donc intéressant de proposer une vanne avec une bille poussée de son siège depuis l'orifice correspondant.

Le document DE 10 2007 010 213 B3 présente une vanne à actionneur électromagnétique. La vanne comprend un siège principal fermé par un obturateur, lui-même doté d'un siège auxiliaire pour équilibrer les pressions lors de l'ouverture. Ce siège auxiliaire est clos à l'aide d'une bille maintenue fermée par un ressort, et qui est ouverte grâce à une aiguille poussée par le plongeur logé dans le solénoïde. Le mouvement d'ouverture de la bille s'effectue au travers du siège, ce qui permet de ne pas écraser la bille contre son siège lors de sa fermeture. Dans cette configuration, la seule énergie cinétique qu'absorbe le siège est celle de la bille et du ressort. Toutefois, cette vanne présente un actionnement abrupt de la bille. De plus, sa forme allongée l'expose particulièrement aux vibrations en raison de l'inertie des portions suspendues.

Le document FR2284077A1 divulgue un distributeur à trois voies à commande électromagnétique. Le distributeur comprend un passage reliant une entrée à une sortie, et deux billes permettant de fermer deux sièges ménagés dans le passage. En outre, le distributeur comprend deux plongeurs actionnant chacun l'une des billes.

Le document US6026860A divulgue une vanne à solénoïde pour deux utilisateurs. Un solénoïde y encercle deux plongeurs chacun muni d'un joint. Chaque joint coopère avec siège dédié.

### Résumé de l'invention

### Problème technique

L'invention a pour objectif de résoudre au moins un des problèmes posés par l'art antérieur. Plus précisément, l'invention a pour objectif de proposer une solution de remplacement à l'état de l'art. L'invention a également pour objectif de réduire les chocs dans la vanne lors de son actionnement tout en préservant sa sécurité de fonctionnement.

### Solution technique

L'invention a trait à une vanne électromagnétique selon la revendication indépendante 1 annexée et selon les revendications dépendantes 2 à 15 annexées.

L'invention a pour objet une vanne électromagnétique, notamment pour gaz cryogénique, la vanne comprenant : un passage reliant une entrée à une sortie ; un siège avec une bille obturatrice associé à l'entrée ; un siège avec une bille obturatrice associé à la sortie ; un circuit magnétique avec une bobine et un plongeur coopérant avec les billes de sorte à les déplacer par rapport à leur siège afin d'ouvrir et/ou de fermer la vanne ; remarquable en ce que le plongeur comprend deux portions magnétiques mobiles l'une par rapport à l'autre sous l'effet du champ magnétique généré par la bobine, de sorte à déplacer en ouverture et/ou en fermeture chaque bille par rapport à son siège de manière asynchrone.

L'invention a également pour objet une vanne électromagnétique, notamment pour gaz cryogénique, la vanne comprenant : un passage reliant une entrée à une sortie ; un siège associé au passage ; une bille coopérant avec le siège de sorte à pouvoir obturer le passage ; un circuit magnétique avec une bobine et un plongeur déplaçant la bille de son siège afin d'ouvrir et/ou de fermer le passage ; remarquable en ce que le plongeur comprend deux portions magnétiques mobiles l'une par rapport à l'autre et actionnables par un flux magnétique généré par la bobine dans le circuit magnétique.

Selon un mode avantageux de l'invention, les portions magnétiques du plongeur comprennent chacune un matériau ferromagnétique ; et sont entourées par la bobine, éventuellement sur la majorité de la longueur d'au moins une ou de chacune des portions.

Selon un mode avantageux de l'invention, les portions magnétiques coulissent l'une dans l'autre, préférentiellement l'une des portions comprend une cavité annulaire dans laquelle se déplace l'autre des deux portions.

Selon un mode avantageux de l'invention, au moins une ou chaque portion magnétique comprend une partie allongée selon la direction de déplacement du plongeur, la ou chaque partie allongée coopérant avec la bille de sorte à pouvoir la pousser et/ou de sorte à pouvoir la tirer.

Selon un mode avantageux de l'invention, l'une des portions magnétiques comporte une partie obturatrice du siège avec une cavité dans laquelle est introduite la ou au moins une bille et/ou l'autre des deux portions comprend une aiguille configurée pour pousser la ou au moins une bille.

Selon un mode avantageux de l'invention, les portions sont une portion principale et une portion auxiliaire ; éventuellement la portion principale présente un diamètre supérieur à celui de la portion auxiliaire, et/ou la portion auxiliaire présente une longueur axiale supérieure à celle de la portion principale.

Selon un mode avantageux de l'invention, la portion principale est disposée le plus en amont dans le passage, et la portion auxiliaire est disposée le plus en aval dans le passage, la masse de la portion auxiliaire étant éventuellement inférieure à la masse de la portion principale.

Selon un mode avantageux de l'invention, la vanne comprend un aimant permanent auxiliaire disposé entre les portions magnétiques du plongeur, éventuellement à l'intérieur de la portion principale.

Selon un mode avantageux de l'invention, la vanne comprend un ressort auxiliaire disposé entre les portions magnétiques du plongeur de sorte à les écarter, éventuellement l'aimant auxiliaire et le ressort auxiliaire sont disposés sur des faces opposées de la portion auxiliaire.

Selon un mode avantageux de l'invention, la vanne comprend un ressort maintenant la bille en position fermée, la bille étant disposée entre ledit ressort et le plongeur, et en ce que lors de l'alimentation de la bobine, la portion principale pousse la bille hors de son siège.

Selon un mode avantageux de l'invention, la vanne comprend deux billes autoclaves chacune actionnée par l'une des portions magnétiques.

Selon un mode avantageux de l'invention, le siège est un siège de l'entrée et la bille est une bille d'entrée, préférentiellement la vanne comprend en outre un échappement disposé dans le passage du même côté de la portion principale que la sortie, éventuellement l'échappement comprend un siège d'échappement en communication avec le siège d'entrée via le passage, et une bille d'échappement apte à obturer le siège d'échappement.

Selon un mode avantageux de l'invention, la vanne comprend un ressort principal et un aimant permanent principal adaptés pour maintenir la portion principale en une position aval; préférentiellement la portion principale est disposée entre le ressort principal et l'aimant principal.

Selon un mode avantageux de l'invention, le passage est un passage de pilotage, et la vanne comprend en outre un niveau de distribution de fluide en communication avec le passage de pilotage, le niveau de distribution comprenant un passage de distribution, une entrée de distribution avec un siège, une sortie de distribution avec un siège, deux clapets ouvrant et fermant sélectivement le siège d'entrée de distribution et le siège de sortie de distribution.

Selon un mode avantageux de l'invention, les clapets de distribution sont commandés par un piston de distribution en communication avec le passage de pilotage, éventuellement via la sortie du passage de pilotage, préférentiellement l'entrée du passage de pilotage communique avec l'entrée de distribution indépendamment de l'ouverture ou de la fermeture de la vanne.

Selon un mode avantageux de l'invention, la vanne est une vanne haute pression. Par haute pression, on peut entendre que la vanne est adaptée à des fluides d'une pression supérieure à 50 bars, préférentiellement supérieure ou égale à 200 bars, plus préférentiellement supérieure ou égale à 400 bars.

Selon un mode avantageux de l'invention, les portions magnétiques sont disposées dans le passage, notamment de pilotage ; préférentiellement les portions magnétiques sont configurées de sorte à pouvoir translater librement l'une par rapport à l'autre.

Selon un mode avantageux de l'invention, le ou chaque siège présente un diamètre inférieur ou égal à 2,00 mm, préférentiellement inférieur à 1,20 mm.

Selon un mode avantageux de l'invention, la ou chaque bille présente un diamètre inférieur ou égal à 3,50 mm, préférentiellement inférieur à 2,00 mm, plus préférentiellement inférieur à 1,60 mm.

Selon un mode avantageux de l'invention, le circuit magnétique comprend une carcasse magnétique enveloppant les portions magnétiques.

Selon un mode avantageux de l'invention, au moins une des portions magnétiques comprend un orifice ou une gorge sur sa surface externe pour permettre le passage d'un fluide d'une face à l'autre de ladite portion de plongeur.

De manière générale, les modes avantageux de chaque objet de l'invention sont également applicables aux autres objets de l'invention.

### Avantages apportés

La division du plongeur permet de phaser son action, c'est-à-dire de présenter trois temps lors des déplacements des portions du plongeur, et/ou de présenter trois valeurs de flux magnétique traversant le plongeur. Suite à l'alimentation de la bobine, le flux peut augmenter progressivement dans le circuit magnétique, et l'effort exercé par le plongeur sur la bille ou sur chaque bille peut évoluer dans le temps.

L'invention permet par ailleurs de commander un port alimentation, une sortie, et un port échappement à l'aide d'une seule bobine. La solution proposée ne nécessite qu'un nombre réduit de pièces, ce qui limite l'incertitude de commande de chaque bille en raison des dispersions dans les chaînes de cote. Scinder le plongeur réduit la masse de chaque portion en mouvement, ce qui limite les chocs. Grâce au gain d'amplitude du plongeur télescopique, sa taille peut être réduite, tout comme celle de la carcasse et de la bobine. Un allégement bénéfique pour le spatial s'opère ainsi.

### Brève description des dessins

La figure 1 esquisse une vanne électromagnétique selon l'invention.
La figure 2 représente la portion pilotage de la vanne électromagnétique en position fermée selon l'invention.
La figure 3 représente la portion pilotage de la vanne électromagnétique dans une position intermédiaire selon l'invention.
La figure 4 représente la portion pilotage de la vanne électromagnétique en position ouverte selon l'invention.

### Description des modes de réalisation

Dans la description qui va suivre, la direction axiale correspond à la direction de déplacement des portions du plongeur.

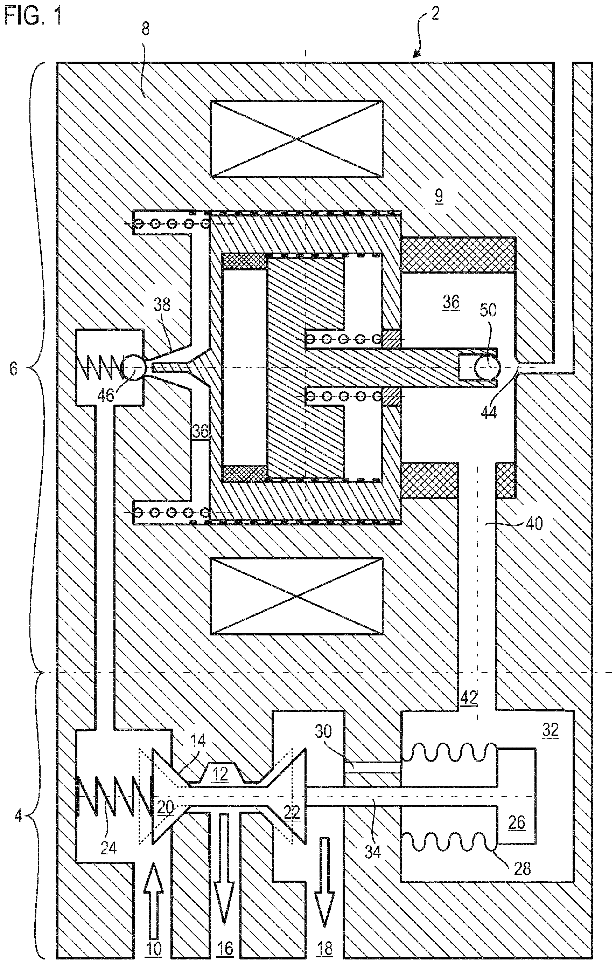

La figure 1 représente une vanne 2 à actionnement électrique, plus précisément à actionnement électromagnétique et mécanique. La vanne 2 permet de gérer un écoulement d'un fluide pressurisé, par exemple gazeux. La vanne 2 est ici représentée dans un état fermé, état qu'elle présente en l'absence d'alimentation électrique. Toutefois, la vanne pourrait être configurée de sorte à rester ouverte au repos, et à se fermer en cas d'alimentation.

La vanne 2 comprend un niveau de distribution 4 gérant la distribution du fluide, et un niveau de pilotage 6, ou niveau de commande 6, commandant le niveau de distribution 4. La vanne 2 peut comprendre un corps 8 ; éventuellement commun aux deux niveaux, ou alternativement réalisé en deux parties. Le corps 8 peut comprendre une carcasse ferromagnétique 9 permettant de former un circuit magnétique dans le niveau de pilotage 6. La vanne présente une entrée 10 commune au niveau de distribution 4 et au niveau de pilotage 6.

Le niveau de distribution 4 comprend un passage de distribution 12 reliant une entrée de distribution 14 avec un siège, et une sortie de distribution 16 ou port utilisateur. Ladite sortie 16 est dotée d'un siège. Optionnellement, le passage de distribution 12 comprend un échappement 18, la sortie 16 étant entre l'entrée 14 et l'échappement 18. Le niveau de distribution 4 comprend en outre des clapets de distribution (20 ; 22) coopérant avec les sièges du niveau de distribution 4 de sorte à les obturer. Les clapets (20 ; 22) sont fixés l'un à l'autre, et sont maintenus en position fermée grâce à un ressort 24. Suite à leur déplacement, les clapets (20 ; 22) occupent une position ouverte, représentée en pointillée, où le clapet d'entrée 20 ouvre son siège tandis que le clapet d'échappement 22 ferme le sien.

Les clapets de distribution (20 ; 22) sont commandés par un piston de distribution 26 qui est actionné par la pression du fluide pressurisé de la vanne 2. Le piston 26 peut être un piston 26 à soufflet 28, ou être un piston inséré dans un alésage de diamètre correspondant. L'intérieur du soufflet 28 peut être en communication avec l'échappement 18 voisin à l'aide d'un orifice 30. Le piston 26 est logé dans une chambre 32 où les variations de pression provoquent sa translation ; translation qui est communiquée aux clapets (20 ; 22) via une tige 34. La pression dans la chambre 32 du piston est commandée par le niveau de pilotage 6. Le piston 26 assure un actionnement mécanique, pneumatique/hydraulique.

Le niveau de pilotage 6 comprend un passage de pilotage 36 reliant une entrée de pilotage 38 avec un siège, et au moins une sortie de pilotage 40. La sortie de pilotage 40 est en communication hydraulique avec le piston 26 du niveau de distribution 4 via un conduit 42. De la sorte, lorsque le niveau de pilotage 6 s'ouvre ; la pression en entrée 10 de la vanne 2 s'exerce sur le piston 26, et le déplace. L'entrée de pilotage 38 et l'entrée de distribution 14 sont reliées par un canal, lui-même issu de l'entrée principale 10 de la vanne 2.

Optionnellement, le passage de pilotage 36 peut comprendre un échappement de pilotage 44 avec un siège, la sortie de pilotage 40 étant entre l'entrée de pilotage 38 et l'échappement de pilotage 44. L'échappement de pilotage 44 est avantageux pour que la pression sur le piston 26 descende lorsque le niveau de pilotage 6 est coupé, et que le clapet d'entrée 20 obture le siège d'entrée du niveau de distribution 4 pour ne plus distribuer de fluide.

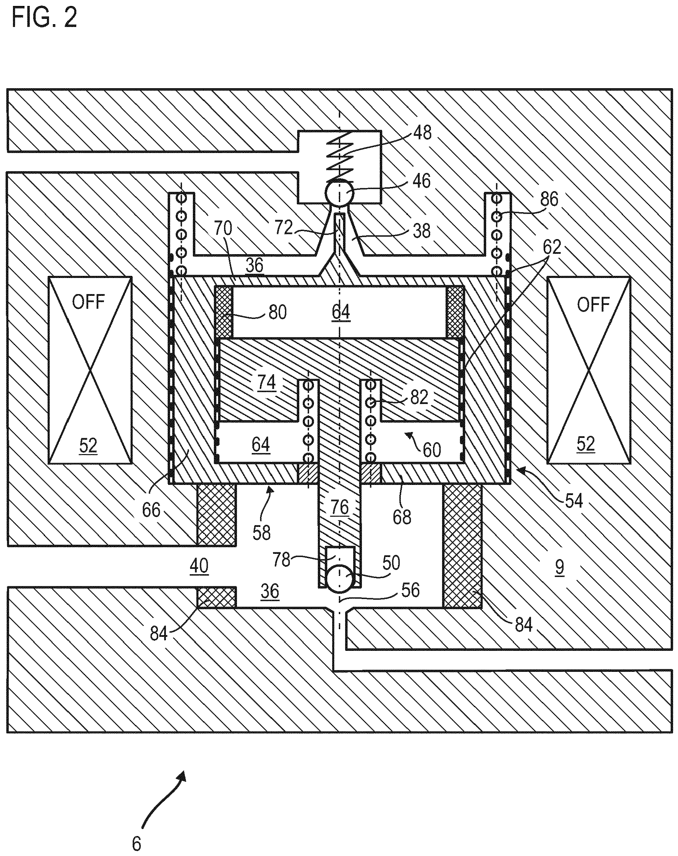

La figure 2 représente le niveau de pilotage 6 en position fermée, au repos, lorsque la vanne 2 n'est pas alimentée électriquement. L'état fermé du niveau de pilotage 6 peut être obtenu en obturant son entrée et/ou en obturant sa sortie.

L'entrée de pilotage 38 comprend une bille d'entrée 46 permettant de la fermer. La bille 46 peut être disposée en amont du siège d'entrée de sorte que la pression du fluide la maintienne fermée, ce qui lui confère un caractère autoclave. Un ressort 48 peut participer à cet effet de fermeture. Le choix d'une bille 46 est avantageux car cet élément peut être produit avec des tolérances de sphéricité strictes ; de l'ordre du micromètre ce qui limite les fuites. La bille 46 peut être impactée sur son siège afin de le déformer et que l'interface d'étanchéité soit plus ajustée. L'échappement de pilotage 44 peut comprendre une bille 50 du côté amont du siège pour l'obturer, pour que la pression puisse contribuer à la plaquer sur son siège. Dans l'état représenté, la bille d'échappement 50 est écartée de son siège de sorte que les deux faces du piston restent à la pression de l'échappement ; soit à un équilibre des pressions. Les billes (46 ; 50) peuvent être en matériau céramique pour en augmenter la dureté et limiter l'inertie. Leur diamètre peut être égal à 1,59 mm, le diamètre des orifices des sièges correspondant peut être égal à 1,12 mm. Ces dimensions limitent à la fois la masse, ainsi que les effets de la pression du fluide sur les billes qui s'opposent à l'ouverture.

Suivant une alternative de l'invention, l'agencement des conduits de sortie et d'échappement du niveau de pilotage peuvent être inversés. De même, au lieu d'être à l'échappement la bille d'échappement de peut être prévue sur la sortie, ou bien une troisième bille peut être ajoutée.

Le niveau de pilotage 6 comprend des moyens d'actionnement magnétique. Il peut comprendre une bobine 52, qui entoure éventuellement le passage de pilotage 36. La bobine 52 peut comprendre plusieurs unités, plusieurs solénoïdes disposés axialement l'un à côté de l'autre, et/ou emmanchés l'un dans l'autre. La bobine 52 peut être disposée entre l'entrée 38 et la sortie 40 du niveau de pilotage 6. Le passage de pilotage 36 peut également être entouré par la carcasse magnétique 9 formant le circuit magnétique ; ledit passage 36 peut généralement traverser la carcasse 9.

Le niveau de pilotage 6 comprend un plongeur 54 qui est disposé à l'intérieur de la bobine 52 et dans le passage de pilotage 36, où il est soumis au flux magnétique du circuit magnétique. Le plongeur 54 peut comprendre un matériau ferromagnétique de sorte à conduire des lignes de champ de flux magnétique. Le plongeur 54 est mobile, ses déplacements permettent d'ouvrir et de fermer le niveau de pilotage 6.

Le plongeur 54 est télescopique ; il est à la fois extensible et rétractable. Ses mouvements s'effectuent parallèlement à l'axe 56 du solénoïde 52. À cet effet, il comprend au moins deux portions magnétiques (58 ; 60) ; dont une portion principale 58 et une portion auxiliaire 60. Les portions magnétiques (58 ; 60) sont à la fois mobiles par rapport au passage de pilotage 36 et mobiles l'une par rapport à l'autre. La portion principale 58 coulisse dans le passage de pilotage 36, en contact d'un chemisage 62 limitant le collage. Les portions (58 ; 60) coopèrent de manière magnétique l'une avec l'autre et sont intégrées dans le circuit magnétique, une même ligne de champ du circuit peut traverser chaque portion. Les portions (58 ; 60) sont articulées l'une à l'autre à l'aide d'une liaison mécanique, par exemple une liaison glissière, ou une liaison pivot coulissant.

Les portions (58 ; 60) peuvent être en contact l'une de l'autre, ou via un chemisage 62 pour éviter leur collage magnétique qui perturberait leur cinématique. Les portions (58 ; 60) ont généralement des formes cylindriques, mais elles pourraient également présenter des sections quadrangulaires. Deux portions magnétiques (58 ; 60) sont présentées, il est néanmoins possible d'agencer trois ou davantage de portions magnétiques qui coopèrent ensemble.

La portion principale 58 peut s'étendre le plus en amont vers l'entrée de pilotage 38, et peut présenter la largeur la plus importante et/ou la masse la plus importante. Elle présente une forme générale de cylindre, ou de tube, avec une cavité cylindrique interne 64. Elle est délimitée par une paroi annulaire 66, et deux disques dont un disque aval 68 percé et un disque amont 70 avec une aiguille 72 permettant de pousser la bille d'entrée 46 de son siège.

La portion auxiliaire 60 présente un corps avec une portion cylindrique 74 ferromagnétique et une barre 76 prolongeant la portion cylindrique 74. La barre 76 peut présenter en aval une cavité 78 logeant la bille d'échappement 50, l'embouchure de la cavité 78 présentant un épaulement ou un rétrécissement pour bloquer la bille dans la cavité afin de pouvoir la soulever de son siège.

Les portions magnétiques (58 ; 60) coulissent l'une dans l'autre ; la portion principale 58 entoure la portion auxiliaire 60. La paroi annulaire 66 enveloppe la portion cylindrique 74 de la portion auxiliaire 60, les disques (68 ; 70) de la portion principale 58 délimitent axialement ladite portion cylindrique 74. La portion principale 58 peut présenter une butée interne 80 limitant le déplacement de la portion auxiliaire, la butée 80 pouvant être un aimant permanent auxiliaire 80 qui permet en outre de retenir la portion auxiliaire 60 vers l'amont. Un ressort auxiliaire 82 peut également permettre de repousser la portion auxiliaire 58 à l'opposé de l'aval. Le ressort auxiliaire 82 et l'aimant auxiliaire 80 sont avantageusement disposés à l'intérieur de la cavité 64 de la portion principale 58, sur des faces opposées de la portion cylindrique 74 de la portion auxiliaire 60 et agissent dans le même sens.

Le niveau de pilotage 6 comprend également un aimant permanent principal 84 disposé en aval du passage de pilotage 36, et qui peut présenter une forme circulaire. Il maintient la portion principale 58 en position fermée, en recul par rapport au siège de l'entrée de pilotage 38. En complément, un ressort principal 86 plaque la portion principale 58 vers l'aimant principal 84 ; vers l'aval, afin qu'elle reste en position fermée.

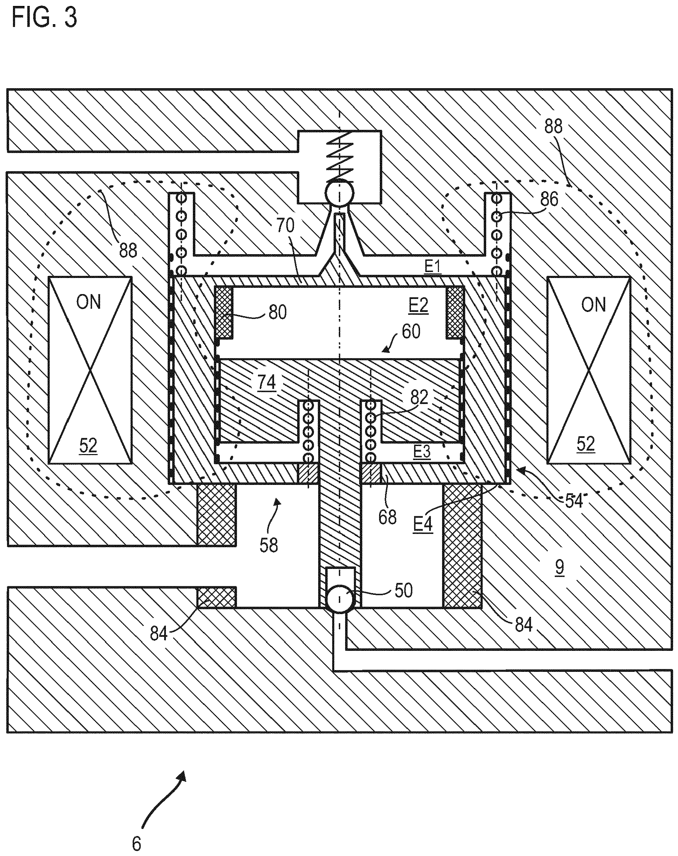

La figure 3 représente le niveau de pilotage 6 dans une étape intermédiaire du mouvement d'ouverture du niveau de pilotage 6, lorsque la bobine 52 est alimentée. Ici, le plongeur 54 se rétracte par rapport à la position fermée.

Lorsque la bobine 52 est alimentée, un flux magnétique 88 apparaît dans le circuit magnétique. Le flux 88 chemine dans la carcasse 9 et traverse le plongeur 54 ; en particulier le flux magnétique 88 traverse les portions magnétiques (58 ; 60). Le flux magnétique 88 crée des forces magnétiques au niveau des entrefers E1, E2, E3, E4, présentés selon le sens d'écoulement. Ces entrefers se partagent entre la carcasse et le plongeur 54. L'entrefer E1 est entre la carcasse 9 et la face amont de la portion principale 58, par exemple son disque amont 70. L'entrefer E2, qui est fermé au repos, est entre le disque amont 70 et la portion cylindrique 74 de la portion auxiliaire 60. L'entrefer E3 est entre la portion cylindrique 74 de la portion auxiliaire 60 et le disque aval 68. L'entrefer E4, qui est fermé au repos et dans le présent état intermédiaire, est entre la carcasse 9 et la face aval de la portion principale 60, par exemple son disque aval 68. Pour permettre un déplacement de la portion auxiliaire 60 dans la portion principale 58, il peut être nécessaire que l'écartement de l'entrefer E3 soit inférieur à l'écartement de l'entrefer E2 puisque leurs sections de passage de flux 88 peuvent être similaires.

Les portions magnétiques (58 ; 60) sont configurées de sorte à ce que l'entrefer E3 se réduise en premier ; de sorte à déplacer la portion auxiliaire 60 avant la portion principale 58. Pour cela, il convient d'optimiser la masse des portions, la largeur des entrefers, les sections des entrefers, la taille et la position des aimants (80 ; 84), la raideur et la précontrainte des ressorts (82 ; 86), les sections de passage du flux 88 dans les portions ferromagnétiques (58 ; 60), et les matériaux ferromagnétiques employés. La section des entrefers est entendue comme la surface au travers de laquelle passe le flux 88.

A l'activation de la bobine 52, la force magnétique s'oppose aux forces de maintien du ressort auxiliaire 82 et de l'aimant auxiliaire 80. La portion auxiliaire 60 se déplace vers l'aval en réduisant l'entrefer E3. La portion auxiliaire 60 peut reposer la bille d'échappement 50 sur son siège de sorte à obturer l'échappement de pilotage 44. Bien entendu, le déplacement de la portion auxiliaire 60 peut modifier le flux magnétique 88 dans la portion principale 58.

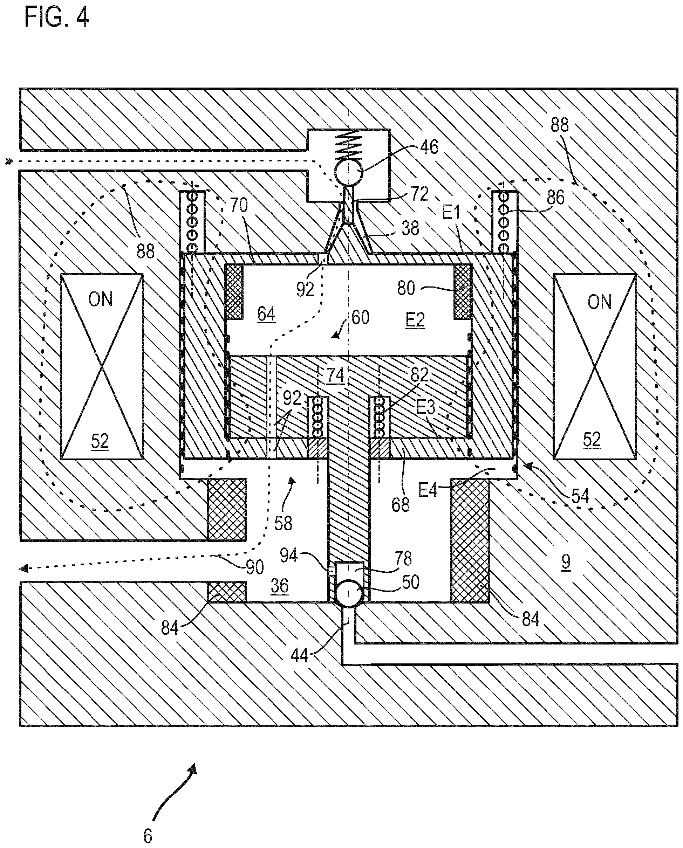

La figure 4 représente la position ouverte du niveau de pilotage 6. Le plongeur 54 se déploie axialement par rapport à la position fermée.

Après avoir déplacé la portion auxiliaire 60 par rapport à la portion principale 58, cette dernière se déplace par rapport au passage de pilotage 36. La portion principale 58 se déplace vers l'amont, en réduisant l'entrefer E1, et en réduisant encore l'entrefer E3, notamment en le fermant. Le disque amont 70 de la portion principale 60 peut se plaquer contre la paroi amont du passage de pilotage 36 dans laquelle est formée l'entrée de pilotage 38, et/ou le disque aval 68 de la portion principale 58 peut venir en butée contre la face aval de la portion cylindrique 74 de la portion auxiliaire 60. L'entrefer E4 s'écarte lors de la dernière phase d'ouverture du niveau de pilotage 6.

Dans son mouvement vers l'amont, la portion principale 58 pousse la bille d'entrée 46 grâce à son poussoir, en l'occurrence l'aiguille 72. La bille d'entrée 46 est soulevée de son siège et permet une circulation de fluide 90 au travers du passage 36. La pression du fluide 90 est communiquée de l'entrée 38 jusqu'à la sortie 40, et en particulier jusqu'au piston 26 actionnant les clapets du niveau de distribution pour ouvrir celui d'entrée.

Le fluide peut traverser ou contourner le plongeur 54. En particulier, il peut en traverser ou contourner chaque portion magnétique (58 ; 60). Le fluide 90 peut cheminer via la cavité 64 de la portion principale. Les portions (58 ; 60) peuvent présenter des orifices 92 traversant les disques (68 ; 70), la portion cylindrique 74 de la portion auxiliaire. Des gorges axiales peuvent être formées sur la paroi annulaire de la portion principale, et/ou sur la surface externe de la portion cylindrique de la portion auxiliaire. Des gorges peuvent être formées sur la cloison interne délimitant le passage de pilotage, par exemple de sorte à contourner la portion principale.

On observe ici que la circulation s'effectue vers la sortie et non vers l'échappement puisque celui-ci a préalablement été fermé par sa bille 50. Un orifice 94 peut être prévu dans la cavité 78 pour plaquer d'avantage la bille d'échappement 50 contre son siège. En l'absence d'orifice 94, la barre 76 de la portion auxiliaire 58 peut assurer une étanchéité autour de l'échappement.

Tant que le courant électrique alimente la bobine 52 , les portions (58 ; 60) restent dans leur configuration ouverte. En coupant l'alimentation électrique, les forces magnétiques produites par la bobine 52 dans le circuit diminuent, éventuellement disparaissent. Les effets des ressorts (82 ; 86) et des aimants (80 ; 84) attirent les portions magnétiques (58 ; 60) dans des positions de repos, telle que celles de la figure 2. Le ressort et/ou l'aimant principal peuvent être plus forts que leurs homologues auxiliaires, par exemple de sorte à ce que la portion principale 58 revienne au repos en premier, ce qui permet de fermer la bille d'entrée 46 avant d'ouvrir la bille d'échappement 50. Cette précaution permet de limiter la perte de fluide via l'échappement.

## Revendications

1. Vanne (2) électromagnétique, notamment pour gaz cryogénique, la vanne (2) comprenant :
- un passage (36) reliant une entrée (38) à une sortie (40) ;
- un siège associé au passage (36);
- une bille (46 ; 50) coopérant avec le siège de sorte à pouvoir obturer le passage (36);
- un circuit magnétique avec une bobine (52) et un plongeur (54) déplaçant la bille (46 ; 50) de son siège afin d'ouvrir et/ou de fermer le passage (36) ;
le plongeur (54) comprend deux portions magnétiques (58 ; 60) mobiles l'une par rapport à l'autre et actionnables par un flux magnétique (88) généré par la bobine (52) dans le circuit magnétique ;
**caractérisée en ce que**
les portions magnétiques (58 ; 60) coulissent l'une dans l'autre.

2. Vanne (2) selon la revendication 1, **caractérisée en ce que** les portions magnétiques (58 ; 60) du plongeur (54) comprennent chacune un matériau ferromagnétique ; et sont entourées par la bobine (52), éventuellement sur la majorité de la longueur d'au moins une ou de chacune des portions (58 ; 60).

3. Vanne (2) selon l'une des revendications 1 à 2, **caractérisée** en ce quel'une des portions (58) comprend une cavité annulaire (64) dans laquelle se déplace l'autre des deux portions (60).

4. Vanne (2) selon l'une des revendications 1 à 3, **caractérisée en ce qu'**au moins une ou chaque portion magnétique (58 ; 60) comprend une partie allongée (72 ; 76) selon la direction de déplacement du plongeur (54), la ou chaque partie allongée coopérant avec la bille (46 ; 50) de sorte à pouvoir la pousser et/ou de sorte à pouvoir la tirer.

5. Vanne (2) selon l'une des revendications 1 à 4, **caractérisée en ce que** l'une des portions magnétiques (58 ; 60) comporte une partie allongée obturatrice (76) du siège avec une cavité (78) dans laquelle est introduite la ou au moins une bille (50) et/ou l'autre des deux portions comprend une partie allongée sous forme d'aiguille (72) configurée pour pousser la ou au moins une bille (46).

6. Vanne (2) selon l'une des revendications 1 à 5, **caractérisée en ce que** les portions sont une portion principale (58) et une portion auxiliaire (60) ; éventuellement la portion principale (58) présente un diamètre supérieur à celui de la portion auxiliaire (60), et/ou la portion auxiliaire (60) présente une longueur axiale supérieure à celle de la portion principale (58).

7. Vanne (2) selon la revendication 6, **caractérisée en ce que** la portion principale (58) est disposée le plus en amont dans le passage (36), et la portion auxiliaire (60) est disposée le plus en aval dans le passage (36), la masse de la portion auxiliaire (60) étant éventuellement inférieure à la masse de la portion principale (58).

8. Vanne (2) selon l'une des revendications 1 à 7, **caractérisée en ce qu'**elle comprend un aimant permanent auxiliaire (80) disposé entre les portions magnétiques (58 ; 60) du plongeur, éventuellement à l'intérieur de la portion principale (58).

9. Vanne (2) selon l'une des revendications 1 à 8, **caractérisée en ce qu'**elle comprend un ressort auxiliaire (82) disposé entre les portions magnétiques (58 ; 60) du plongeur de sorte à les écarter, éventuellement l'aimant auxiliaire (80) et le ressort auxiliaire (82) sont disposés sur des faces opposées de la portion auxiliaire (58).

10. Vanne (2) selon l'une des revendications 6 à 9, **caractérisée en ce qu'**elle comprend un ressort (48) maintenant la bille (46) en position fermée, la bille (46) étant disposée entre ledit ressort et le plongeur (54), et **en ce que** lors de l'alimentation de la bobine (52), la portion principale (58) pousse la bille (46) hors de son siège.

11. Vanne (2) selon l'une des revendications 1 à 10, **caractérisée en ce qu'**elle comprend deux billes (46 ; 50) autoclaves chacune actionnée par l'une des portions magnétiques (58 ; 60).

12. Vanne (2) selon l'une des revendications 1 à 11, **caractérisée en ce que** le siège est un siège de l'entrée (38) et la bille est une bille d'entrée (46), préférentiellement la vanne (2) comprend en outre un échappement (44) disposé dans le passage (36) du même côté de la portion principale que la sortie, éventuellement l'échappement (44) comprend un siège d'échappement en communication avec le siège d'entrée via le passage, et une bille d'échappement (50) apte à obturer le siège d'échappement.

13. Vanne (2) selon l'une des revendications 1 à 12, **caractérisée en ce qu'**elle comprend un ressort principal (86) et un aimant permanent principal (84) adaptés pour maintenir la portion principale (58) en une position aval ; préférentiellement la portion principale (58) est disposée entre le ressort principal (86) et l'aimant principal (84).

14. Vanne (2) selon l'une des revendications 1 à 13, **caractérisée en ce que** le passage est un passage de pilotage (36), et **en ce que** la vanne (2) comprend en outre un niveau de distribution (4) de fluide en communication avec le passage de pilotage (36), le niveau de distribution comprenant un passage de distribution (12), une entrée de distribution (14) avec un siège, une sortie de distribution (16) avec un siège, deux clapets (20; 22) ouvrant et fermant sélectivement le siège d'entrée de distribution et le siège de sortie de distribution.

15. Vanne (2) selon la revendication 14, **caractérisée en ce que** les clapets de distribution (20 ; 22) sont commandés par un piston de distribution (26) en communication avec le passage de pilotage (36), éventuellement via la sortie (40) du passage de pilotage (36), préférentiellement l'entrée (38) du passage de pilotage (36) communique avec l'entrée de distribution (14) indépendamment de l'ouverture ou de la fermeture de la vanne (2).

## Patentansprüche

1. Elektromagnetisches Ventil (2), insbesondere für ein kryogenes Gas, wobei das Ventil (2) folgendes beinhaltet:
- einen Durchgang (36), der einen Eingang (38) mit einem Ausgang (40) verbindet;
- einen Sitz, der dem Durchgang (36) zugeordnet ist;
- eine Kugel (46; 50), die mit dem Sitz zusammenwirkt, um den Durchgang (36) verschließen zu können;
- einen Magnetkreis mit einer Spule (52) und einem Stößel (54), der die Kugel (46; 50) von ihrem Sitz verschiebt, um den Durchgang (36) zu öffnen und/oder zu schließen;
wobei der Stößel (54) zwei magnetische Abschnitte (58; 60) beinhaltet, die im Verhältnis zueinander beweglich sind und anhand eines Magnetflusses (88) betätigt werden können, der von der Spule (52) im Magnetkreis erzeugt wird; **dadurch gekennzeichnet, dass**
die magnetischen Abschnitte (58; 60) ineinander gleiten.

2. Ventil (2) nach Anspruch 1, **dadurch gekennzeichnet, dass** die magnetischen Abschnitte (58; 60) des Stößels (54) jeweils ein ferromagnetisches Material beinhalten; und von der Spule (52) umgeben sind, gegebenenfalls auf dem größeren Teil der Länge von mindestens einem oder jedem der Abschnitte (58; 60).

3. Ventil (2) nach einem der Ansprüche 1 bis 2, **dadurch gekennzeichnet, dass** einer der Abschnitte (58) einen ringförmigen Hohlraum aufweist, in dem sich einer der beiden Abschnitte (60) bewegt.

4. Ventil (2) nach einem der Ansprüche 1 bis 3, **dadurch gekennzeichnet, dass** mindestens einer oder jeder der magnetischen Abschnitte (58; 60) einen langgezogenen Teil (72; 76) in der Bewegungsrichtung des Stößels (54) beinhaltet, wobei der oder jeder der langgezogenen Teile in der Weise mit der Kugel (46; 50) zusammenwirkt, dass er diese stoßen und/oder ziehen kann.

5. Ventil (2) nach einem der Ansprüche 1 bis 4, **dadurch gekennzeichnet, dass** einer der magnetischen Abschnitte (58; 60) einen langgezogenen Teil (76) beinhaltet, um den Sitz zu verschließen, mit einem Hohlraum (78), in den die oder mindestens eine Kugel (50) eingeführt wird und/oder der andere der beiden Abschnitte einen langgezogenen Teil in Form einer Nadel (72) beinhaltet, der konfiguriert ist, um die oder mindestens eine Kugel (46) zu stoßen.

6. Ventil (2) nach einem der Ansprüche 1 bis 5, **dadurch gekennzeichnet, dass** die Abschnitte ein Hauptabschnitt (58) und ein Hilfsabschnitt (60) sind; der Hauptabschnitt (58) einen Durchmesser aufweist, der größer ist, als derjenige des Hilfsabschnitts (60) und/oder der Hilfsabschnitt (60) eine axiale Länge aufweist, die größer ist, als diejenige des Hauptabschnitts (58).

7. Ventil (2) nach Anspruch 6, **dadurch gekennzeichnet, dass** der Hauptabschnitt (58) möglichst weit stromaufwärts im Durchgang (36) und der Hilfsabschnitt (60) möglichst weit stromabwärts im Durchgang (36) angeordnet ist, wobei die Masse des Hilfsabschnitts (60) eventuell geringer ist, als die Masse des Hauptabschnitts (58).

8. Ventil (2) nach einem der Ansprüche 1 bis 7, **dadurch gekennzeichnet, dass** es einen Hilfsdauermagneten (80) beinhaltet, der zwischen den magnetischen Abschnitten (58; 60) des Stößels angeordnet ist, eventuell innerhalb des Hauptabschnitts (58).

9. Ventil (2) nach einem der Ansprüche 1 bis 8, **dadurch gekennzeichnet, dass** es eine Hilfsfeder (82) beinhaltet, die zwischen den magnetischen Abschnitten (58; 60) des Stößels angeordnet ist, um sie zurückzudrängen, wobei der Hilfsmagnet (80) und die Hilfsfeder (82) eventuell an gegenüberliegenden Seiten des Hilfsabschnitts (58) angeordnet sind.

10. Ventil (2) nach einem der Ansprüche 6 bis 9, **dadurch gekennzeichnet, dass** es eine Feder (48) beinhaltet, die die Kugel (46) in geschlossener Position hält, wobei die Kugel (46) zwischen der genannten Feder und dem Stößel (54) angeordnet ist und wenn die Spule (52) unter Strom gesetzt wird, der Hauptabschnitt (58) die Kugel (46) aus ihrem Sitz herausdrückt.

11. Ventil (2) nach einem der Ansprüche 1 bis 10, **dadurch gekennzeichnet, dass** es zwei Autoklavkugeln (46; 50) beinhaltet, die jeweils durch einen der magnetischen Abschnitte (58; 60) betätigt werden.

12. Ventil (2) nach einem der Ansprüche 1 bis 11, **dadurch gekennzeichnet, dass** der Sitz ein Eingangssitz (38) und die Kugel eine Eingangskugel (46) ist, wobei das Ventil (2) vorzugsweise außerdem einen Auslass (44) beinhaltet, der im Durchgang (36) angeordnet ist und zwar auf der gleichen Seite des Hauptabschnitts, wie der Ausgang, wobei der Auslass (44) gegebenenfalls einen Auslasssitz beinhaltet, der anhand des Durchgangs mit dem Eingangssitz kommuniziert, und eine Auslasskugel (50), die in der Lage ist, den Auslasssitz zu verschließen.

13. Ventil (2) nach einem der Ansprüche 1 bis 12, **dadurch gekennzeichnet, dass** es eine Hauptfeder (86) und einen Hauptdauermagneten (84) beinhaltet, die angepasst sind, um den Hauptabschnitt (58) in einer unteren Position zu halten; wobei der Hauptabschnitt (58) vorzugsweise zwischen der Hauptfeder (86) und dem Hauptmagneten (84) angeordnet ist.

14. Ventil (2) nach einem der Ansprüche 1 bis 13, **dadurch gekennzeichnet, dass** der Durchgang ein Steuerdurchgang (36) ist und das Ventil (2) außerdem eine Verteilerstufe (4) für das Gas beinhaltet, die mit dem Steuerdurchgang (36) kommuniziert, wobei die Verteilerstufe einen Verteilerdurchgang (12), einen Verteilereingang (14) mit einem Sitz, einen Verteilerausgang (16) mit einem Sitz, zwei Klappen (20; 22), die selektiv den Sitz des Verteilereingangs und den Sitz des Verteilerausgangs öffnen und schließen, beinhaltet.

15. Ventil (2) nach Anspruch 14, **dadurch gekennzeichnet, dass** die Verteilerklappen (20; 22) anhand eines Verteilerkolbens (26) betätigt werden, der mit dem Steuerdurchgang (36) kommuniziert, eventuell anhand des Ausgangs (40) des Steuerdurchgangs (36), wobei der Eingang (38) des Steuerdurchgangs (36) vorzugsweise mit dem Verteilereingang (14) kommuniziert, unabhängig vom Öffnen oder Schließen des Ventils (2).

## Claims

1. Electromagnetic valve (2), in particular for cryogenic gas, the valve (2) comprising:
- a passage (36) connecting an inlet (38) to an outlet (40);
- a seat associated with the passage (36);
- a ball (46; 50) cooperating with the seat so as to be able to close the passage (36);
- a magnetic circuit with a coil (52) and a plunger (54) displacing the ball (46; 50) from the seat thereof so as to open and/or close the passage (36);
wherein the plunger (54) comprises two magnetic portions (58; 60) movable relative to one another, and actionable by a magnetic flux (88) generated par the coil (52) in the magnetic circuit;
**characterized in that**
the magnetic portions (58; 60) slide one inside the other.

2. Valve (2) in accordance with Claim 1, **characterized in that** the magnetic portions (58; 60) of the plunger (54) each comprise a ferromagnetic material and are surrounded by the coil (52), possibly over the majority of the length of at least one or each of the portions (58; 60).

3. Valve (2) in accordance with one of Claims 1 and 2, **characterized in that** one of the portions (58) comprises an annular cavity (64) in which the other of the two portions (60) is displaced.

4. Valve (2) in accordance with one of Claims 1 to 3, **characterized in that** at least one or each magnetic portion (58; 60) comprises an elongate part (72; 76) in the direction of displacement of the plunger (54), said or each elongate part cooperating with the ball (46; 50) so as to be able to push said ball and/or to pull said ball.

5. Valve (2) in accordance with one of Claims 1 to 4, **characterized in that** one of the magnetic portions (58; 60) comprises an elongate part able to close the seat, with a cavity (78) in which the at least one ball (50) is introduced and/or the other of the magnetic portions comprises an elongate part shaped as needle (72) configured for pushing the at least one ball (46).

6. Valve (2) in accordance with one of Claims 1 to 5, **characterized in that** the portions are a primary portion (58) and a secondary portion (60), possibly the primary portion (58) having a diameter greater than that of the secondary portion (60), and/or the secondary portion (60) being longer than the primary portion (58).

7. Valve (2) in accordance with Claim 6, **characterized in that** the primary portion (58) is disposed further upstream in the passage (36), and the secondary portion (60) is disposed further downstream in the passage (36), the mass of the secondary portion (60) being less than the mass of the primary portion (58).

8. Valve (2) in accordance with one of Claims 1 to 7, **characterized in that** the valve comprises a secondary permanent magnet (80) disposed between the magnetic portions (58; 60) of the plunger, possibly inside the primary portion (58).

9. Valve (2) in accordance with one of Claims 1 to 8, **characterized in that** the valve comprises an secondary spring (82) disposed between the magnetic portions (58; 60) of the plunger so as to distance these, possibly the secondary permanent magnet (80) and the secondary spring (82) are arranged on opposed faces of the primary portion (58).

10. Valve (2) in accordance with one of Claims 6 to 9, **characterized in that** the valve comprises a spring (48) holding the ball (46) in a closed position, the ball (46) being disposed between said spring and the plunger (54), and **in that** the primary portion (58) pushes the ball (46) out of the seat thereof as the coil (52) is energized.

11. Valve (2) in accordance with one of Claims 1 to 10, **characterized in that** the valve comprises two autoclave balls (46; 50), each being actuated by one of the magnetic portions (58; 60).

12. Valve (2) in accordance with one of Claims 1 to 11, **characterized in that** the seat is an inlet seat (38) and the ball is an inlet ball (46), preferably the valve (2) also comprising an exhaust (44) disposed in the passage (36) on the same side as the outlet, possibly the exhaust (44) comprising an exhaust seat in communication with the inlet seat via the passage, and an exhaust ball (50) able to seal the exhaust seat.

13. Valve (2) in accordance with one of Claims 1 to 12, **characterized in that** the valve comprises a primary spring (86) and a primary permanent magnet (84) suitable for holding the primary portion (58) in a downstream position, preferably the primary portion (58) being disposed between the primary spring (86) and the primary magnet (84).

14. Valve (2) in accordance with one of Claims 1 to 13, **characterized in that** the passage is a control passage (36), and **in that** the valve (2) also comprises a fluid distribution level (4) in communication with the control passage (36), the distribution level comprising a distribution passage (12), a distribution inlet (14) with a seat, and a distribution outlet (16) with a seat, two shutters (20; 22) opening and closing selectively the distribution inlet seat and the distribution outlet seat.

15. Valve in accordance with Claim 14, **characterized in that** the distribution shutters (20; 22) are controlled by a distribution piston (26) in communication with the control passage (36), possibly via the outlet (40) of the control passage (36), preferably the inlet (38) of the control passage (36) communicating with the distribution inlet (14) independently of the opening or closing of the valve (2).
